# FASCICULE DE BREVET EUROPEEN

(11) **EP 4 189 363 B1**
(45) Date de publication et mention de la délivrance du brevet: **25.12.2024**
(21) Numéro de dépôt: 21752579.9
(22) Date de dépôt: 20.07.2021
(51) Int. Cl.: G01N 11/04, G01N 13/02, G01N 11/08

(54) **PROCEDE DE DETERMINATION DES PARAMETRES RHEOLOGIQUES D'UN FLUIDE**
VERFAHREN ZUR BESTIMMUNG DER RHEOLOGISCHEN PARAMETER EINES FLUIDS
METHOD FOR DETERMINING THE RHEOLOGICAL PARAMETERS OF A FLUID

(30) Priorité: 27.07.2020 FR 2007918
(43) Date de publication de la demande: 07.06.2023
(73) Titulaire: Université Grenoble Alpes, 38400 Saint-Martin-d'Hères (FR); Centre National de la Recherche Scientifique, 75016 Paris (FR); Institut Polytechnique de Grenoble, 38000 Grenoble (FR)
(72) Inventeur: MAITREJEAN, Guillaume, 38610 GIERES (FR); ROUX, Denis, 38700 CORENC (FR)
(74) Mandataire: Novaimo
(86) Numéro de dépôt international: PCT/FR2021/051355
(87) Numéro de publication internationale: WO 2022/023643

(56) Documents cités:
- US-A1- 2018 180 549
- TIREL CHRISTOPHE ET AL: "Measurement of extensional properties during free jet breakup", vol. 61, no. 2, 14 January 2020 (2020-01-14), DE, XP055795685, ISSN: 0723-4864, Retrieved from the Internet <URL:http://link.springer.com/article/10.1007/s00348-019-2845-8/fulltext.html> [retrieved on 20210415], DOI: 10.1007/s00348-019-2845-8
- MEACHAM J. M. ET AL: "Droplet formation and ejection from a micromachined ultrasonic droplet generator: Visualization and scaling", vol. 17, no. 10, 1 January 2005 (2005-01-01), US, pages 100605, XP055795628, ISSN: 1070-6631, Retrieved from the Internet <URL:https://www.researchgate.net/profile/John-Meacham/publication/24390705_Droplet_formation_and_ejection_from_a_micromachined_ultrasonic_droplet_generator_Visualization_and_scaling/links/00b7d526b0b8dac590000000/Droplet-formation-and-ejection-from-a-micromachined-ultrasonic-droplet-generator-Visualizat> [retrieved on 20210415], DOI: 10.1063/1.1921249
- HOATH S. D. ET AL: "Links Between Ink Rheology, Drop-on-Demand Jet Formation, and Printability", vol. 53, no. 4, 1 January 2009 (2009-01-01), US, pages 041208, XP055795654, ISSN: 1062-3701, Retrieved from the Internet <URL:https://www.researchgate.net/profile/Malcolm-Mackley/publication/243582668_Links_Between_Ink_Rheology_Drop-on-Demand_Jet_Formation_and_Printability/links/575e71b508aed884621842c4/Links-Between-Ink-Rheology-Drop-on-Demand-Jet-Formation-and-Printability.pdf> [retrieved on 20210415], DOI: 10.2352/J.ImagingSci.Technol.2009.53.4.041208

## Description

La présente invention concerne de manière générale la détermination des paramètres rhéologiques de fluides, quelle que soit leur nature, et plus particulièrement au moyen d'un procédé mettant en oeuvre un générateur de gouttes à jet continu.

Par détermination des paramètres rhéologiques de fluides, on entend, au sens de la présente invention, l'identification, pour tout type de fluide (qu'il soit newtonien, rhéofluidifiant, rhéoépaississant, viscoélastique ou à seuil, etc.) toutes les propriétés rhéologiques des fluides à analyser, comme notamment la tension de surface, la masse volumique, la viscosité dynamique et la viscosité cinématique, le temps de relaxation, etc.,

Par générateur de gouttes à jet continu, on entend, au sens de la présente invention un dispositif d'éjection continue à jet d'encre, qui est usuellement désigné par l'acronyme CIJ

La compréhension des propriétés d'écoulement des fluides et la mesure des propriétés rhéologiques et physiques associées sont cruciales tant du point de vue de la recherche que de l'industrie.

Les principales grandeurs caractérisant un fluide sont sa masse volumique, sa tension de surface et ses propriétés rhéologiques de viscosité et d'élasticité. Pour déterminer ces grandeurs, différents appareils de mesure sont nécessaires. En fonction des appareils utilisés, des couplages ou perturbations rendent difficile la mesure de ces propriétés. Par exemple, les propriétés rhéologiques d'élasticité sont perturbées par la tension superficielle et les inerties des fluides et des outils de mesure de viscoélasticité comme les rhéomètres rotatifs couramment utilisés en recherche et en industrie.

TIREL CHRISTOPHE ET AL ("Measurement of extensional properties during free jet breakup",vol. 61, no. 2 14 janvier 2020) décrit un procédé pour déterminer les paramètres rhéologiques d'un fluide, à l'aide d'un générateur de gouttes à jet continu.

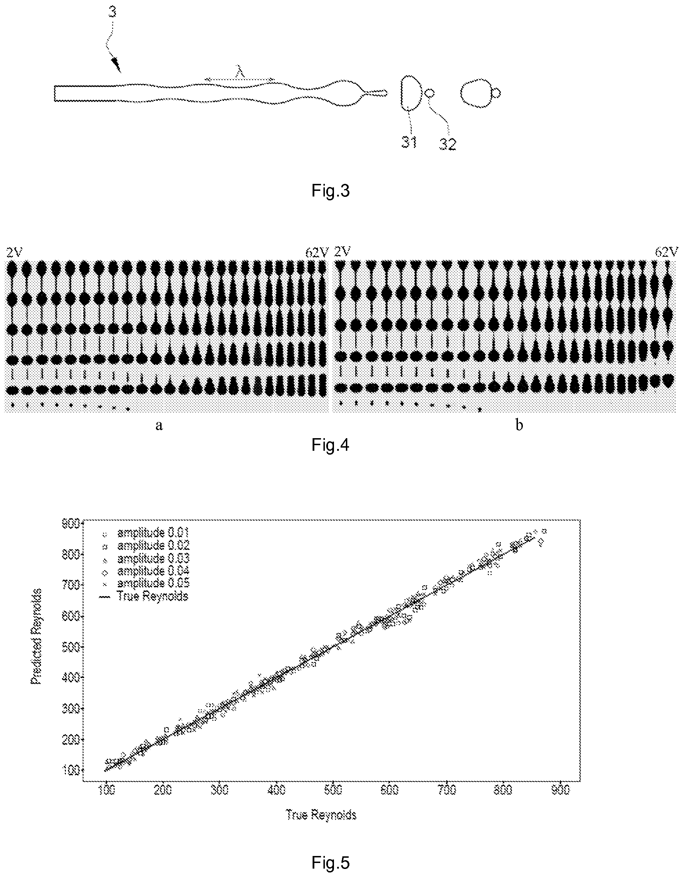

Afin de déterminer les grandeurs physiques des fluides, la présente invention repose sur le développement d'un nouveau procédé de détermination des paramètres rhéologiques de fluides mettant en oeuvre un générateur de gouttes à jet continu de type CIJ et utilisant une approche dite de "Data-Science" reposant sur un ensemble de données obtenue à partir du procédé CIJ ainsi que de la simulation numérique de ce procédé. Lors de l'éjection d'un fluide par le procédé d'éjection CIJ trois forces, inertielle, visqueuse et interfaciale (tension superficielle) sont en compétition et affectent notablement la morphologie du jet et des gouttes obtenues. Sous certaines conditions, la morphologie du jet est ainsi unique (comme illustré par la figure 4) et directement liée aux propriétés rhéologiques du fluide. La longueur à partir de laquelle le jet se brise est appelée longueur de brisure. Le jet brisé présente des gouttes et en fonction des conditions expérimentales des satellites (gouttes secondaires de volume(s) inférieur(s) aux gouttes principales).

Dans la présente invention, on appellera jet complet, le jet de fluide depuis la buse jusqu'aux gouttes ayant une forme stabilisée.

En éjectant un fluide à l'aide d'un dispositif CIJ adapté, et en comparant sa morphologie à un jeu de données contenant une vaste gamme de morphologies de jet par approche "Data-science", il est possible de déterminer avec précision les propriétés rhéologiques du fluide, c'est à dire sa viscosité dynamique, sa tension de surface et sa masse volumique.

La présente invention a donc pour objet un procédé pour déterminer les paramètres rhéologiques d'un fluide qui comprend les étapes suivantes :
A) introduction dudit fluide dans un générateur de gouttes à jet continu comprenant un réservoir maintenu à une pression donnée p₀ à l'aide d'une pompe ou de tout autre dispositif de mise sous pression et communiquant via un orifice d'entrée avec une tête d'éjection dont la température est contrôlée ;
B) stimulation périodique d'amplitude A (en volts) et de fréquence F=1/T d'un actionneur piézoélectrique, de manière que ledit actionneur piézoélectrique perturbe le fluide sous pression dans ladite tête d'éjection ;
C) éjection hors de ladite tête d'éjection, via une buse de sortie, du fluide ainsi perturbé, qui se présente sous forme d'un jet;
D) obtention, à l'aide d'un stroboscope à un instant donné t, d'une image fixe et éclairée du jet complet;
E) enregistrement d'une ou plusieurs photographies de tout ou partie de ladite image fixe et éclairée du jet complet, à l'aide d'une caméra ou d'un appareil photographique ;
F) exploitation des photographies de l'étape E pour en extraire un jeu de données descriptif dudit jet;
G) détermination des paramètres rhéologiques dudit fluide (1) pour une buse d'éjection donnée, une amplitude de stimulation Aᵢ et une pression p₀ᵢ données, i étant un entier naturel au moins égal à 2, ladite détermination des paramètres rhéologiques étant réalisée à l'aide d'une méthode statistique préalablement paramétrée en utilisant comme jeu d'entraînement une base de données contenant les morphologies de jets de fluides connus.

Le procédé selon l'invention est capable de déterminer les paramètres rhéologiques de tout type de fluide, qu'il soit newtonien ou non newtonien.

La première étape A) du procédé selon l'invention consiste à introduire, dans un générateur de gouttes à jet continu, un fluide dont on souhaite déterminer les paramètres rhéologiques. Le procédé selon l'invention est adapté à tout type de fluide, qu'il soit newtonien, rhéofluidifiant, rhéoépaississant, viscoélastique, à seuil, etc.

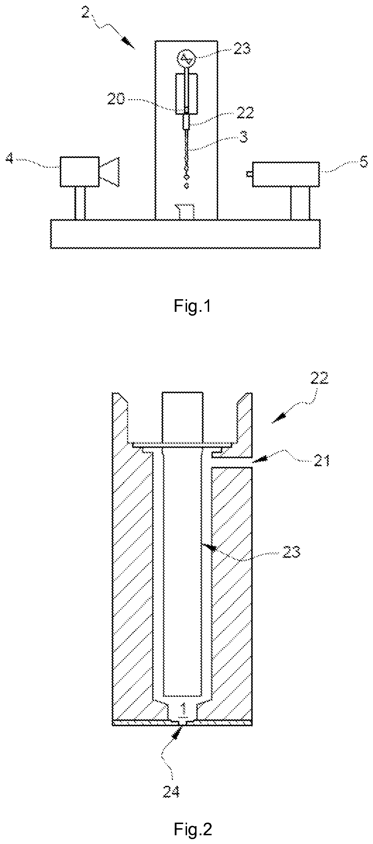

Le générateur de gouttes à jet continu utilisé dans le cadre du procédé selon l'invention (également appelé dispositif de type CIJ) comprend un réservoir maintenu à une pression donnée p₀ à l'aide d'une pompe ou de tout autre dispositif de mise sous pression et communiquant via un orifice d'entrée avec une tête d'éjection dont la température est contrôlée, tel qu'illustré sur la figure 1.

La deuxième étape B du procédé selon l'invention consiste à réaliser une stimulation périodique d'amplitude A (en volts) et de fréquence F=1/T d'un actionneur piézoélectrique, de manière que ce dernier perturbe le fluide sous pression dans ladite tête d'éjection. La mise sous pression du fluide permet de contrôler le débit du fluide lors de son éjection.

De manière avantageuse, l'actionneur piézoélectrique est immergé dans le fluide sous pression dans ladite tête d'éjection.

La troisième étape C) du procédé selon l'invention consiste à éjecter hors de ladite tête d'éjection, via une buse de sortie, le fluide ainsi perturbé à l'étape B, qui se présente alors sous forme d'un jet de morphologie donnée.

La quatrième étape D) du procédé selon l'invention est une étape d'obtention, à l'aide d'un stroboscope à un instant donné t, d'une image fixe et éclairée du jet complet.

Par image du jeu complet, on entend, au sens de la présente invention, une image du jet de fluide depuis la buse jusqu'aux gouttes ayant une forme est stabilisée

On procède ensuite, à l'aide d'une caméra ou d'un appareil photographique, à l'enregistrement d'une ou plusieurs photographies de tout ou partie de l'image du jet complet dont la position apparaît fixe grâce à l'éclairage stroboscopique dudit jet complet (étape E). Ces images sont ensuite exploitées (étape F) pour en extraire un jeu de données descriptif du dit jet et comparé à une base de données afin d'en extraire les propriétés rhéologiques.

En particulier, cette base de données est constituée des morphologies de jets de fluides de différentes viscosité et de tension de surface. Il est donc nécessaire d'obtenir les morphologies d'un grand nombre de jets de fluides ayant des viscosités et/ou tensions de surface différentes et connues. Comme la morphologie des jets dépend aussi des paramètres du dispositif CIJ, il est nécessaire de constituer cette base de données dans les mêmes conditions d'éjection du dispositif CIJ. Par ailleurs, le nombre de fluides connus (c'est à dire dont on connait tous les paramètres rhéologiques, à savoir la (ou les) viscosité(s), la tension de surface et la masse volumique) et disponibles expérimentalement, est insuffisant pour constituer le jeu de données. Aussi, une approche par simulation numérique est nécessaire : pour une buse donnée, les jets sont générés numériquement et validés expérimentalement à l'aide de quelques fluides réels connus, y compris des fluides étalons, en comparant les résultats numériques et expérimentaux. Une prédiction fidèle du modèle numérique est ainsi absolument nécessaire afin d'avoir une détermination fiable des propriétés rhéologiques.

Les morphologies des jets sont définies par la forme géométrique prise par la surface libre du jet. Il est possible d'extraire, à partir de la forme géométrique du jet (tel qu'illustré sur la figure 3) des informations telles que les propriétés suivantes (non exhaustif):
- le diamètre du jet non perturbé,
- la longueur de brisure (plus petite distance entre la buse et la première goutte),
- le volume de gouttes,
- la surface de gouttes à une certaine distance de la brisure,
- le volume du/des satellite(s),
- la surface du/des satellite(s) à une certaine distance de la brisure,
- la dynamique du/des satellite(s) (lent, infini ou rapide),
- la longueur d'onde.

La mesure des propriétés rhéologiques du fluide éjecté se fait en comparant la morphologie du jet à celles contenues dans une base de données cartographiant une vaste gamme de propriétés rhéologiques.

Ainsi, plus particulièrement, la dernière étape du procédé selon l'invention (étape G) est une étape de comparaison et interpolation du jeu de données descriptif du jet obtenu à l'étape F.

Cette étape F de comparaison et interpolation étant réalisée à l'aide d'un algorithme statistique pour une buse de sortie, une pression p₀ᵢ et une amplitude de stimulation Aᵢ données avec i étant un entier naturel au moins égal à 3, de manière à estimer/déterminer les paramètres rhéologiques dudit fluide.

En d'autres termes, cette étape F s'appuie sur l'algorithme statistique qui est un algorithme d'apprentissage automatique permettant d'identifier, à partir d'informations expérimentalement obtenues, le fluide en présence à l'aide de bases de données regroupant un grand nombre de fluides connus.

De manière avantageuse, le jeu de données descriptif du jet peut être la forme géométrique du jet ou des données extraites de ladite la forme géométrique de tout ou partie du jet complet. Ainsi, la détermination des propriétés rhéologiques des fluides que l'on analyse à l'aide du procédé selon l'invention s'appuie sur la forme géométrique prise par le jet et notamment sur le fait que cette forme prend un caractère unique en fonction de l'amplitude de stimulation.

De manière avantageuse, la base de données peut comporter des informations obtenues avec des jets réels et/ou obtenues avec des jets générés par simulation numérique (qui sont préalablement et validés expérimentalement à l'aide de fluides étalons).

Selon une première variante de réalisation de l'étape G du procédé selon l'invention, l'algorithme statistique peut être basé sur un modèle de type régression linéaire. Les paramètres du modèle seront déterminés préalablement en utilisant comme jeu d'entraînement la base de données contenant les morphologies de jets de fluides connus.

Selon une deuxième variante de réalisation de l'étape G du procédé selon l'invention, l'algorithme statistique peut être basé sur un modèle de type réseau neuronal artificiel.

De manière préférée, le modèle de type réseau neuronal peut comporter au moins une couche de neurones, qui sera préalablement entrainé en utilisant comme jeu d'entraînement la base de données contenant les morphologies de jets de fluides connus.

La comparaison et interpolation à l'étape G s'appuie ainsi sur des modèles statistiques dont les coefficients ont été déterminés préalablement.

Selon un premier mode de réalisation du procédé selon l'invention, on procède de la manière suivante :
- on réalise les étapes B à G pour deux amplitudes de stimulation A₁ et A₂ différentes ;
- si les paramètres rhéologiques du fluide estimés pour chacune de ces amplitudes de stimulation A₁ et A₂ ne convergent pas, on réitère alors les étapes B à G avec une amplitude A₃ ou plusieurs autres amplitudes de stimulation Aᵢ, i étant un entier naturel au moins égal à 3, jusqu'à obtenir une convergence des paramètres rhéologiques du fluide ainsi estimés.

Selon un deuxième mode de réalisation du procédé selon l'invention, on procède de la manière suivante :
- on réalise les étapes B à G pour deux pressions p₀₁ et p₀₂ différentes ;
- si les paramètres rhéologiques du fluide estimés pour chacune de ces pression p₀₁ et p₀₂ ne convergent pas, on réitère alors lesdites étapes B à G avec une pression p₀₂ ou plusieurs autres pression p₀ᵢ, i étant un entier naturel au moins égal à 3, jusqu'à obtenir une convergence des paramètres rhéologiques du fluide ainsi estimés.

D'autres avantages et particularités de la présente invention résulteront de la description qui va suivre, donnée à titre d'exemple non limitatif et faite en référence aux figures annexées et aux exemples :
- [Fig.1] - la figure 1 est une représentation schématique en coupe d'un exemple de générateur de gouttes à jet continu de type CIJ mis en oeuvre dans le procédé selon l'invention ;
- [Fig.2]- la figure 2 est une vue agrandie de la tête d'éjection du générateur CIJ représenté sur la figure 1 ;
- [Fig.3] - la figure 3 est un exemple de jet numérique avec la présence de gouttes et de satellites ;
- [Fig.4]- la figure 4 montre les morphologies de jets de 2 fluides de même tension de surface, masse volumique et viscosité à faible gradient de vitesse, pour différentes stimulations, les données étant obtenues avec un dispositif CIJ identique dans les 2 cas ; la partie a de [Fig.4] montre la morphologie d'un fluide à comportement newtonien (viscosité constante), tandis que la partie b de [Fig.4] montre la morphologie d'un fluide à comportement rhéofluidifiant (viscosité décroissante avec le taux de cisaillement) ;
- [Fig.5] - la figure 5montre l'évolution des résultats des nombres de Reynolds prédits (en ordonnées) par le réseau neuronal par rapport au nombre de Reynolds réel du jet (en abscisse).

Les figures 1 et 2 montrent le système de mesure expérimental utilisé dans le cadre de la présente invention : il s'agit d'un générateur de gouttes à jet continu 2 ou dispositif de type CIJ. Le fluide 1 dont on cherche à déterminer les propriétés rhéologiques est contenu dans un réservoir 20 maintenu sous pression au moyen d'une pompe (non représenté sur ces figures) pour assurer l'écoulement. La pompe est soit pilotée en pression soit en débit. Le fluide 1 à analyser parvient jusqu'à la tête d'éjection 22 du générateur 2 et sort sous forme d'un jet 3. La tête d'éjection 22 est contrôlée en température via un bain thermostaté ou tout autre dispositif de contrôle de température. Le fluide 1 éjecté est stimulé à l'aide d'un actionneur piézoélectrique 23 avant l'éjection, afin d'augmenter l'instabilité dite de Rayleigh-Plateau qui est responsable de la brisure du jet 3. Le jet 3 éjecté par le dispositif de type CIJ 2 et perturbé par la stimulation périodique de l'actionneur piézoélectrique 23 génère des gouttes à fréquence fixe proche de la perturbation. Grâce à un stroboscope, il est alors possible d'obtenir une image fixe et éclairée du jet. Cedernier est ensuite photographié par un appareil photographique 5 (ou d'une caméra). Une partie ou l'intégralité du jet 3 depuis la buse jusqu'à la brisure (cf. [Fig.3]), ainsi que les gouttes générées sont obtenus en déplaçant l'appareil photographique 5 (ou la caméra) le long du jet. La morphologie du jet 3 est telle que celle montrée par la figure 3 qui montre un exemple de jet numérique avec la présence de gouttes 31 et de satellites 32 (un seul satellite sur [fig.3]). Dans l'exemple de la figure 3, la dynamique de satellite 32 est lente car le satellite 32 est rattrapé par la goutte 31 qui le précède.

### EXEMPLES

### EXEMPLE 1 : utilisation du dispositif de type CIJ pour générer des jets continus de gouttes d'un fluide newtonien et d'un fluide non newtonien ; étude de leurs morphologies

Afin de déterminer les paramètres rhéologiques d'un fluide Newtonien 1 (noté A) à viscosité constante, on génère, à l'aide du générateur de gouttes à jet continu 2 illustré sur les figures 1 et 2, un jet continu de gouttes de fluide 1 (noté A).

Puis, on recommence et on génère, à l'aide du même générateur de gouttes à jet continu 2, un jet continu de gouttes d'un fluide non Newtonien 1 (noté B), légèrement rhéofluidifiant à très haut taux de cisaillement (supérieur 300 000 s-1) en vue également d'en déterminer ses paramètres rhéologiques.

Les fluides A et B présentent la même tension de surface, la même viscosité à bas taux de cisaillement et la même masse volumique. Ainsi la différence entre ces deux fluides réside seulement dans le caractère rhéofluidifiant du fluide B.

Les fluides A et B sont éjectés à travers les mêmes dispositifs de type CIJ à différentes amplitudes de stimulation, la tension de l'actionneur piézoélectrique 23 variant de 2V à 62V. Une photo du jet 3 au niveau de la brisure est réalisée pour chaque stimulation Fig. 4, pour les fluides A (Figure 4a) et B (Figure 4b).

Malgré des propriétés rhéologiques très proches, la compétition entre les différentes forces inertielle, visqueuse et interfaciale (tension superficielle) mises en jeu lors de l'éjection du fluide permet de discriminer les fluides et on observe une forte différence de forme géométrique du jet pour les hautes amplitudes de stimulations.

### EXEMPLE 2 : détermination de la viscosité de fluides en mettant en oeuvre la deuxième variante de réalisation de l'étape G du procédé selon l'invention, selon laquelle l'algorithme statistique est basé sur un modèle de type réseau neuronal artificiel.

Cet exemple illustre la détermination de la viscosité de fluides à l'aide du procédé selon l'invention, dans le cas où l'algorithme statistique utilisé à l'étape G est basé sur un modèle de type réseau neuronal artificiel.

La buse d'éjection 24 est sélectionnée et identique pour tous les jets numériques et expérimentaux générés par un dispositif de type CIJ 2 tel que représenté sur les figures 1 et 2.

Dans cet exemple, la vitesse moyenne d'éjection, la masse volumique et la tension de surface sont aussi fixées. Seule la viscosité du fluide varie et le nombre de Reynolds lui est directement lié.

4005 jets de fluides Newtoniens sont alors générés à l'aide d'un logiciel de simulation en mécanique des fluides numériques : pour un nombre de Reynolds en sorti de buse variant de 100 à 900, par pas de un, cinq amplitudes de stimulations sont simulés numériquement. Les résultats des simulations sont rigoureusement comparés à quelques jets de fluides réels afin de s'assurer de la pertinence du résultat obtenu.

A partir de la forme géométrique des 4005 jets ainsi obtenus, les données suivantes sont extraites pour chaque jet, afin de constituer la base de données:
- la longueur du jet 3 avant brisure,
- la surface du jet 3 avant brisure,
- le volume du jet 3 avant brisure,
- pour les 6 premières gouttes, la longueur, la hauteur maximale, le volume et la surface de la goutte ainsi que l'écart entre elle et la précédente (pour la première goutte on donne l'écart entre celle-ci et le jet).

On sélectionne aléatoirement 80% du jeu de données afin de constituer un jeu d'entraînement à fin d'apprentissage dudit réseau neuronal artificiel et les 20% restant constitueront le jeu de données test.

La figure 5 illustre les résultats de prédictions du réseau neuronal à partir du jeu de données tests. On observe une excellente corrélation entre le nombre de Reynolds prédit et le nombre de Reynolds réel, avec une erreur moyenne relative inférieure à 3%

Ce résultat montre que le procédé selon l'invention permet de déterminer avec précision les caractéristiques rhéologiques des fluides.

## Revendications

1. Procédé pour déterminer les paramètres rhéologiques d'un fluide (1), ledit procédé comprenant les étapes suivantes :
A) introduction dudit fluide (1) dans un générateur de gouttes à jet continu (2) comprenant un réservoir (20) maintenu à une pression donnée p₀ à l'aide d'un dispositif de mise sous pression et communiquant via un orifice d'entrée (21) avec une tête d'éjection (22) dont la température est contrôlée ;
B) stimulation périodique d'amplitude A (en volts) et de fréquence F=1/T d'un actionneur piézoélectrique (23), de manière que ledit actionneur piézoélectrique (23) perturbe le fluide (1) sous pression dans ladite tête d'éjection (22) ;
C) éjection, via une buse de sortie (24) et hors de ladite tête d'éjection (22), dudit fluide (1) ainsi perturbé, qui se présente sous forme d'un jet (3) ;
D) obtention, à l'aide d'un stroboscope (4) à un instant donné t, d'une image fixe et éclairée du jet complet (3);
E) enregistrement d'une ou plusieurs photographies de tout ou partie de ladite image fixe et éclairée du jet complet (3) à l'aide d'une caméra ou d'un appareil photographique (5) ;
F) exploitation des photographies de l'étape E pour en extraire un jeu de données descriptif dudit jet (3);
G) détermination des paramètres rhéologiques dudit fluide (1) pour une buse de sortie donnée, une amplitude de stimulation Aᵢ et une pression p₀ᵢ données, i étant un entier naturel au moins égal à 2, ladite détermination des paramètres rhéologiques étant réalisée à l'aide d'une méthode statistique préalablement paramétrée en utilisant comme jeu d'entraînement une base de données contenant les morphologies de jets de fluides connus.

2. Procédé selon la revendication 1, dans lequel l'actionneur piézoélectrique (23) est immergé dans le fluide (1) sous pression dans ladite tête d'éjection (22).

3. Procédé selon les revendications 1 ou 2, dans lequel la méthode statistique est basée sur un modèle de type régression linéaire.

4. Procédé selon les revendications 1 ou 2, dans lequel la méthode statistique est basé sur un modèle de type réseau neuronal artificiel.

5. Procédé selon la revendication 4, dans lequel le modèle de type réseau neuronal comporte au moins une couche de neurones.

6. Procédé selon l'une quelconque des revendications 1 à 5, dans lequel le jeu de données comprend les données de la forme géométrique de tout ou partie du jet complet.

7. Procédé selon l'une quelconque des revendications 1 à 5 dans lequel le jeu de données est basé sur des paramètres obtenus à partir la forme géométrique de tout ou partie du jet complet.

8. Procédé selon l'une quelconque des revendications 1 à 5, dans laquelle la base de données comporte des informations obtenues avec des jets de fluides expérimentaux et/ou obtenues avec des jets de fluides générés par simulation numérique.

9. Procédé selon l'une quelconque des revendications 1 à 6, dans lequel :
- on réalise les étapes B à G pour deux amplitudes de stimulation A₁ et A₂ différentes ;
- si les paramètres rhéologiques dudit fluide (1) estimés pour chacune de ces amplitudes de stimulation A₁ et A₂ ne convergent pas, on réitère lesdites étapes B à G avec une amplitude A₃ ou plusieurs autres amplitudes de stimulation Aᵢ, i étant un entier naturel au moins égal à 3, jusqu'à obtenir une convergence des paramètres rhéologiques dudit fluide (1) ainsi estimés.

10. Procédé selon l'une quelconque des revendications 1 à 6, dans lequel :
- on réalise les étapes B à G pour deux pressions p₀₁ et p₀₂ différentes ;
- si les paramètres rhéologiques dudit fluide (1) estimés pour chacune de ces pression p₀₁ et p₀₂ ne convergent pas, on réitère lesdites étapes B à G avec une pression p₀₃ ou plusieurs autres pression p0i, i étant un entier naturel au moins égal à 3, jusqu'à obtenir une convergence des paramètres rhéologiques dudit fluide (1) ainsi estimés.

## Patentansprüche

1. Verfahren zur Bestimmung der rheologischen Parameter eines Fluids (1), wobei das Verfahren die folgenden Schritte umfasst:
A) Einleiten des Fluids (1) in einen Tropfengenerator mit kontinuierlichem Strahl (2), der einen Behälter (20) umfasst, der mithilfe einer Druckbeaufschlagungsvorrichtung auf einem gegebenen Druck p₀ gehalten wird und über eine Einlassöffnung (21) mit einem Ausstoßkopf (22) in Verbindung steht, dessen Temperatur kontrolliert wird;
B) periodisches Anregen mit der Amplitude A (in Volt) und der Frequenz F=1/T eines piezoelektrischen Aktors (23), so dass der piezoelektrische Aktor (23) das unter Druck stehende Fluid (1) in dem Ausstoßkopf (22) stört;
C) Ausstoßen, durch eine Auslassdüse (24) und aus dem Ausstoßkopf (22) heraus, des so gestörten Fluids (1), das in Form eines Strahls (3) vorliegt;
D) Erhalten, mithilfe eines Stroboskops (4) zu einem gegebenen Zeitpunkt t, eines beleuchteten Standbilds des kompletten Strahls (3);
E) Erfassen einer oder mehrerer Fotografien des gesamten oder eines Teils des beleuchteten Standbilds des kompletten Strahls (3) mithilfe einer Kamera oder eines Fotoapparats (5);
F) Auswerten der Fotografien des Schritts E, um daraus einen den Strahl (3) beschreibenden Datensatz zu extrahieren;
G) Bestimmen der rheologischen Parameter des Fluids (1) für eine gegebene Auslassdüse, eine gegebene Anregungsamplitude Aᵢ und einen gegebenen Druck p₀ᵢ, wobei i eine natürliche ganze Zahl von mindestens 2 ist, wobei das Bestimmen der rheologischen Parameter mithilfe einer statistischen Methode ausgeführt wird, die zuvor parametriert wird, indem als Trainingssatz eine Datenbank verwendet wird, die die Morphologien von Strahlen bekannter Fluide enthält.

2. Verfahren nach Anspruch 1, wobei der piezoelektrische Aktor (23) in das unter Druck stehende Fluid (1) in dem Ausstoßkopf (22) eingetaucht ist.

3. Verfahren nach Anspruch 1 oder 2, wobei die statistische Methode auf einem Modell vom Typ lineare Regression beruht.

4. Verfahren nach Anspruch 1 oder 2, wobei die statistische Methode auf einem Modell vom Typ künstliches neuronales Netz beruht.

5. Verfahren nach Anspruch 4, wobei das Modell vom Typ neuronales Netz mindestens eine Neuronenschicht beinhaltet.

6. Verfahren nach einem der Ansprüche 1 bis 5, wobei der Datensatz die Daten der geometrischen Form des gesamten oder eines Teils des kompletten Strahls umfasst.

7. Verfahren nach einem der Ansprüche 1 bis 5, wobei der Datensatz auf Parametern beruht, die ausgehend von der geometrischen Form des gesamten oder eines Teils des kompletten Strahls erhalten werden.

8. Verfahren nach einem der Ansprüche 1 bis 5, wobei die Datenbank Informationen beinhaltet, die mit Strahlen von experimentellen Fluiden erhalten werden und/oder mit Strahlen von Fluiden erhalten werden, die durch digitale Simulation erzeugt werden.

9. Verfahren nach einem der Ansprüche 1 bis 6, wobei:
- die Schritte B bis G für zwei verschiedene Anregungsamplituden A₁ und A₂ ausgeführt werden;
- wenn die rheologischen Parameter des Fluids (1), die für jede dieser Anregungsamplituden A₁ und A₂ bewertet werden, nicht übereinstimmen, die Schritte B bis G mit einer Amplitude A₃ oder mehreren anderen Anregungsamplituden Aᵢ, wobei i eine natürliche ganze Zahl von mindestens 3 ist, wiederholt werden, bis eine Übereinstimmung der so bewerteten rheologischen Parameter des Fluids (1) erhalten wird.

10. Verfahren nach einem der Ansprüche 1 bis 6, wobei:
- die Schritte B bis G für zwei verschiedene Drücke p₀₁ und p₀₂ ausgeführt werden;
- wenn die rheologischen Parameter des Fluids (1), die für jeden dieser Drücke p₀₁ und p₀₂ bewertet werden, nicht übereinstimmen, die Schritte B bis G mit einem Druck p₀₃ oder mehreren anderen Drücken p₀ᵢ, wobei i eine natürliche ganze Zahl von mindestens 3 ist, wiederholt werden, bis eine Übereinstimmung der so bewerteten rheologischen Parameter des Fluids (1) erhalten wird.

## Claims

1. A method for determining the rheological parameters of a fluid (1), said method comprising the following steps:
A) introduction of said fluid (1) into a continuous-jet droplet generator (2) comprising a tank (20) maintained at a given pressure p₀ using a pressurizing device and communicating via an inlet orifice (21) with an ejection head (22), the temperature of which is controlled;
B) periodic stimulation, of amplitude A (in Volts) and of frequency F=1/T, of a piezoelectric actuator (23), such that said piezoelectric actuator (23) disturbs the pressurized fluid (1) in said ejection head (22);
C) ejection, via an outlet nozzle (24) and out of said ejection head (22), of said duly disturbed fluid (1), which takes the form of a jet (3);
D) obtaining, using a stroboscope (4) at a given instant t, of a fixed and illuminated image of the complete jet (3);
E) recording of one or more photographs of all or part of said fixed and illuminated image of the complete jet (3) using a camera or a photographic device (5);
F) analysis of the photographs from the step E to extract therefrom a set of data descriptive of said jet (3);
G) determination of the rheological parameters of said fluid (1) for a given outlet nozzle, and for a given stimulation amplitude Aᵢ and pressure p₀ᵢ, i being a natural integer at least equal to 2, said determination of the rheological parameters being performed using a statistical method previously parameterized by using as training set a database containing the morphologies of known fluid jets.

2. The method as claimed in claim 1, wherein the piezoelectric actuator (23) is immersed in the pressurized fluid (1) in said ejection head (22).

3. The method as claimed in claim 1 or 2, wherein the statistical method is based on a model of linear regression type.

4. The method as claimed in claim 1 or 2, wherein the statistical method is based on a model of artificial neural network type.

5. The method as claimed in claim 4, wherein the model of neural network type comprises at least one layer of neurons.

6. The method as claimed in any one of claims 1 to 5, wherein the dataset comprises the data on the geometrical form of all or part of the complete jet.

7. The method as claimed in any one of claims 1 to 5, wherein the dataset is based on parameters obtained from the geometrical form of all or part of the complete jet.

8. The method as claimed in any one of claims 1 to 5, wherein the database comprises information obtained with experimental fluid jets and/or obtained with fluid jets generated by digital simulation.

9. The method as claimed in any one of claims 1 to 6, wherein:
- the steps B to G are performed with two different stimulation amplitudes A₁ and A₂;
- if the rheological parameters of said fluid (1) estimated for each of these stimulation amplitudes A₁ and A₂ do not converge, said steps B to G are reiterated with one amplitude A₃ or several other stimulation amplitudes Aᵢ, i being a natural integer at least equal to 3, until a convergence of the duly estimated rheological parameters of said fluid (1) is obtained.

10. The method as claimed in any one of claims 1 to 6, wherein:
- the steps B to G are performed for two different pressures p₀₁ and p₀₂;
- if the rheological parameters of said fluid (1) estimated for each of these pressures p₀₁ and p₀₂ do not converge, said steps B to G are reiterated with one pressure p₃ or several other pressures p0i, i being a natural integer at least equal to 3, until a convergence of the duly estimated rheological parameters of said fluid (1) is obtained.
